# EUROPÄISCHE PATENTSCHRIFT

(11) **EP 3 417 248 B1**
(45) Veröffentlichungstag und Bekanntmachung des Hinweises auf die Patenterteilung: **07.04.2021**
(21) Anmeldenummer: 17709364.8
(22) Anmeldetag: 14.02.2017
(51) Int. Cl.: G01D 11/24, G01D 11/30

(54) **GETRIEBESENSORANSCHLUSSSYSTEM UND GETRIEBE MIT EINEM SOLCHEN SYSTEM**
GEARBOX SENSOR CONNECTION SYSTEM AND GEARBOX HAVING SUCH A SYSTEM
SYSTÈME DE BRANCHEMENT DE CAPTEUR POUR UNE TRANSMISSION ET TRANSMISSION ÉQUIPÉE D'UN TEL SYSTÈME

(30) Priorität: 16.02.2016 DE 102016202315
(43) Veröffentlichungstag der Anmeldung: 26.12.2018
(73) Patentinhaber: Voith Patent GmbH, 89522 Heidenheim (DE)
(72) Erfinder: PATZ, Dominik, 89449 Zusamaltheim (DE); RAUCH, Matthias, 87437 Kempten (DE)
(74) Vertreter: Voith Patent GmbH - Patentabteilung
(86) Internationale Anmeldenummer: PCT/EP2017/053211
(87) Internationale Veröffentlichungsnummer: WO 2017/140643

(56) Entgegenhaltungen:
- EP-A1- 1 674 835
- US-A- 4 075 562
- US-A- 4 137 768
- US-A- 4 164 864
- US-A- 4 495 810
- US-A- 5 709 475
- US-A- 5 922 953

## Beschreibung

Die vorliegende Erfindung betrifft ein Getriebesensoranschlusssystem und ein Getriebe mit einem solchen Getriebesensoranschlusssystem gemäß den unabhängigen Ansprüchen.

In der Praxis werden in Getrieben, beispielsweise Kraftfahrzeuggetrieben oder auch stationären Getrieben, wie sie die vorliegende Erfindung insbesondere betrifft, Sensoren zum Erfassen von Betriebszuständen des Getriebes, beispielsweise Temperatursensoren oder Drucksensoren verwendet, die mit außerhalb des Getriebegehäuses positionierten Steuerungen, insbesondere Steuergeräten, verbunden sind. Die Verbindung erfolgt über Sensorleitungen, beispielsweise in Form von elektrischen Kabeln oder auch anderen Kabeln, insbesondere temperaturleitenden Kabeln oder optischen Kabeln.

Herkömmlich werden solche Sensorleitungen lose im Inneren des Getriebes verlegt und an einzelnen Positionen mit Rohrstücken und/oder Kabelschellen befestigt. Die Leitungen können dabei an einer fest vorgegebenen Position derselben eine Gehäusedurchführung mit einer Ölsperre aufweisen, sodass diese Gehäusedurchführung in einer Bohrung des Getriebegehäuses befestigt werden kann. Durch die festgelegte Position der Gehäusedurchführung an der Sensorleitung kommt es in der Praxis vor, dass der im Inneren des Gehäuses befindliche Abschnitt der Sensorleitung zu lang ist. Dieser wird dann aufgerollt und geeignet innen am Gehäuse befestigt.

Ferner ist es bei herkömmlichen Ausführungsformen nicht möglich, den Sensor ohne Öffnen des Getriebes auszutauschen und zur Vermeidung eines Ölaustritts ist meist auch im Inneren der Sensorleitung eine Ölsperre notwendig.

US 4,495,810 offenbart eine Ausführung, bei welcher der Sensor mit Sensorleitung hinsichtlich seiner Lage im Getriebe durch die beidseitige Verbindung mit dem Sensorführungskanal durch dessen Lage fixiert ist. Ein Austausch des Sensors kann nur durch Aufhebung der Verbindung des Sensors bzw. der Sensorleitung mit dem Sensorführungskanal erfolgen, wozu das Getriebe geöffnet werden muss.

US 5 922 953 A, US 4 075 562 A und US 5 709 475 A offenbaren weitere Getriebesensoranschlusssysteme.

Der vorliegenden Erfindung liegt die Aufgabe zugrunde, ein Getriebesensoranschlusssystem anzugeben, mit welchem ein im Inneren eines Getriebes positionierter Sensor und dessen Sensorleitung leichter als bisher im Getriebe montiert werden kann und bei welchem der Sensor vorteilhaft ohne Öffnen des Getriebegehäuses ausgetauscht werden kann. Das System soll sich durch eine sichere Abdichtung des Getriebes gegen Ölaustritt und eine einfache Bedienbarkeit auszeichnen.

Die erfindungsgemäße Aufgabe wird durch ein Getriebesensoranschlusssystem mit den Merkmalen des Anspruchs 1 und ein Getriebe mit den Merkmalen des Anspruchs 11 gelöst. In den abhängigen Ansprüchen sind vorteilhafte und besonders zweckmäßige Ausgestaltungen der Erfindung angegeben.

Ein erfindungsgemäßes Getriebesensoranschlusssystem zum Anschließen und Kontaktieren eines innerhalb eines Getriebes positionierten Sensors ist in Anspruch 1 definiert.

Die Sensorleitung ist dabei im Bereich der Sensoraufnahme frei von einer Verbindung mit dem Sensorleitungskanal in diesem geführt. Dies ermöglicht, dass der Sensor mit angeschlossener Sensorleitung durch den Sensorleitungskanal auch bei geschlossenem Getriebe führbar ist und im Fall eines Austauschs des Sensors nicht das gesamte System mit Sensorführungskanal unter Öffnung des Getriebes mit getauscht werden muss. Der Sensorleitungskanal bleibt bestehen und bietet aufgrund seiner dichten Kopplung mit der Sensoraufnahme und der Durchführung den Vorteil einer gegenüber dem Getriebeinnenraum abgedichteten Umgebung zur Anordnung des Sensorleitungskanals.

Erfindungsgemäß ist es, wenn die Sensorleitung im Bereich der Gehäuseöffnung wenigstens mittelbar, vorzugsweise direkt mit dem Sensorleitungskanal über eine kraft- oder formschlüssige lösbare Verbindung verbunden ist. Durch die einseitige Verbindung der Sensorleitung mit dem Gehäuse erfolgt eine Lagefixierung dieser gegenüber dem Gehäuse.

Erfindungsgemäß wird die Sensorleitung über eine Steckverbindung und/oder Klemmverbindung mit dem Sensorleitungskanal verbunden. Diese Verbindungen sind schnell lösbar und einfach realisierbar. Alternativ ist beispielhaft auch eine Schraubverbindung denkbar.

Erfindungsgemäß weist der Sensorleitungskanal wenigstens einen ersten Rohrbogen im Bereich der Gehäusedurchführung und wenigstens einen zweiten Rohrbogen im Bereich der Sensoraufnahme auf, wobei der erste Rohrbogen mit dem zweiten Rohrbogen über einen flexiblen Schlauch oder eine Rohrleitung zur Ausbildung des Sensorleitungskanals verbunden ist. Die Rohrleitung kann dabei starr, insbesondere jedoch plastisch verformbar ausgeführt sein, um diese beim Einsetzen in ein Getriebe in eine geeignete Form zu biegen. Auch der flexible Schlauch kann mehr oder minder schlaff oder starr ausgeführt sein, um eine entsprechend geeignete Handhabung beim Einsetzen in das Getriebe zu ermöglichen. Somit kann der Sensorleitungskanal von der Gehäusedurchführung über den ersten Rohrbogen, den flexiblen Schlauch beziehungsweise die Rohrleitung zum zweiten Rohrbogen und von dort zur Sensoraufnahme führen und dabei einen von außerhalb des Getriebegehäuses zugänglichen gegenüber dem Getriebeinnenraum abgedichteten Kanal zur Verfügung stellen, über welchen der Sensor mit der Sensorleitung ohne Öffnen des Getriebegehäuses aus dem Getriebe entfernt werden kann und umgekehrt eingeführt werden kann. Somit ist die Sensoraufnahme nach Art eines Katheters von außerhalb des Gehäuses erreichbar.

Anstelle eines Rohrbogens kann auch ein nicht gebogenes Rohrstück vorgesehen sein, sodass, wenn nachfolgend ein Rohrbogen genannt wird, anstelle von diesem auch ein gerades Rohrstück verwendet werden kann.

Der flexible Schlauch oder die Rohrleitung ist vorteilhaft lösbar an den Rohrbögen angeschlossen sein, erfindungsgemäß mittels einer Schraubverbindung oder einer Steckverbindung, und gegenüber den Rohrbögen öldicht abgedichtet sein, um den vom Getriebeöl abgedichteten Innenraum des Sensorleitungskanals zur Verfügung zu stellen.

Der erste Rohrbogen kann gemäß einer vorteilhaften Ausführungsform der Erfindung eine Klemmverschraubung zu seiner Befestigung in einer Bohrung des Gehäuses aufweisen und gegenüber der Klemmverschraubung öldicht abgedichtet sein. Die Klemmverschraubung kann dann wiederum öldicht gegenüber dem Gehäuse abgedichtet sein, mittels der zuvor genannten Gehäuseabdichtung. Die Klemmverschraubung ist somit vorteilhaft Bestandteil der Gehäusedurchführung beziehungsweise bildet diese aus.

Gemäß einer besonders vorteilhaften Ausgestaltung der Erfindung weist die Sensoraufnahme einen Aufnahmeraum zur Aufnahme des Sensors mit einer den Aufnahmeraum umschließenden Wandung auf und der zweite Rohrbogen ist gegenüber der Wandung öldicht abgedichtet. Somit wird ein Aufnahmeraum innerhalb des Getriebes geschaffen, in welchen der Sensor eingebracht werden kann und der gegenüber dem Getriebeinnenraum öldicht abgedichtet ist. Dieser Aufnahmeraum ist über den Sensorleitungskanal beziehungsweise dessen Innenraum ölfrei erreichbar, und zwar von außerhalb des Getriebes über die Gehäusedurchführung.

Der zweite Rohrbogen kann nun in die Wandung eingesteckt oder eingeschraubt sein.

Gemäß einer alternativen Ausgestaltung der Erfindung, bei welcher der Sensor frei im ölbeaufschlagten Getriebeinnenraum positioniert werden kann, ist der Sensorleitungskanal im Bereich der Sensoraufnahme mit einem Dichtelement zum öldichten Abdichten des Innenraumes des Sensorleitungskanals gegenüber der Sensorleitung versehen. Beispielsweise ist ein Ende des Sensorleitungskanals mit einer Ringspaltdichtung gegenüber der äußeren Oberfläche der Sensorleitung abgedichtet.

Gemäß einer vorteilhaften Ausführungsform der Erfindung ist der flexible Schlauch oder auch bei einer Ausführungsform mit einer Rohrleitung die Rohrleitung an seinen/ihren beiden Enden jeweils mit einem Schraubnippel oder einem Stecknippel versehen und die beiden Rohrbögen sind an ihrem dem flexiblen Schlauch zugeordneten beziehungsweise der Rohrleitung zugeordneten Ende jeweils mit einer Schraubmuffe oder Steckmuffe versehen. Ferner ist jeweils eine Dichtung zwischen einem Nippel und einer Muffe eingebracht. Dadurch ist eine besonders leichte Montage des erfindungsgemäßen Systems möglich. Insbesondere kann aus einer Vielzahl von flexiblen Schläuchen mit unterschiedlicher Länge der für einen Anwendungsfall geeignetste Schlauch ausgewählt und zwischen die beiden Rohrbögen eingesetzt werden. Insbesondere kann aus einer Vielzahl von flexiblen Schläuchen oder Rohrleitungen mit unterschiedlicher Länge der für einen Anwendungsfall geeignetste Schlauch beziehungsweise die geeignetste Rohrleitung ausgewählt und zwischen die beiden Rohrbögen eingesetzt werden.

Wenn der Sensoraufnahmekanal im Bereich der Gehäusedurchführung einen ersten Rohrbogen aufweist, kann dieser vorteilhaft von einer ersten in das Gehäuse eingeschraubten beziehungsweise einschraubbaren Klemmschraube sowie einer zweiten in die erste Klemmschraube eingeschraubten beziehungsweise einschraubbaren Klemmschraube umschlossen werden. Ferner ist es möglich, dass in die zweite Klemmschraube eine dritte die Sensorleitung umschließende Klemmschraube einschraubbar ist. Die dritte die Sensorleitung umschließende Klemmschraube kann an der Sensorleitung vorteilhaft ortsfest fixiert oder fixierbar sein.

Der Sensorleitungskanal kann insbesondere auf seiner den Innenraum umschließenden Oberfläche zumindest teilweise oder vollständig aus PTFE hergestellt sein oder eine PTFE-Beschichtung aufweisen.

Gemäß einer Ausführungsform ist der flexible Schlauch als PTFE-Schlauch ausgeführt, insbesondere mit einer Ummantelung, beispielsweise aus Edelstahl.

Wenn die innere Oberfläche des Sensorleitungskanals mit PTFE ausgeführt ist, gleitet der Sensor beziehungsweise die Sensorleitung besonders einfach beim Einführen und Ausführen in den Sensorleitungskanal.

Wenn die Biegeradien der Rohrbögen ausreichend groß gewählt werden und Abknickungen vermieden werden, wird ebenfalls das Einschieben und Herausziehen des Sensors beziehungsweise der Sensorleitung erleichtert.

Der Sensor kann beispielsweise ein Temperatursensor, ein Drucksensor, ein Positionssensor und/oder ein Füllstandssensor sein. Andere Sensoren sind möglich. Sie Sensorleitung überträgt entsprechende Größen oder elektrische beziehungsweise optische Signale, wie eingangs dargestellt.

Ein erfindungsgemäßes Getriebe weist einen von einem Gehäuse umschlossenen Getriebeinnenraum und einen im Getriebe positionierten Sensor auf, der über eine Sensorleitung mit einer Umgebung des Getriebes außerhalb des Gehäuses verbunden ist. Die Sensorleitung ist in einem erfindungsgemäßen Getriebesensoranschlusssystem aufgenommen und öldicht vom Getriebeinnenraum abgetrennt.

Die Erfindung soll nachfolgend anhand von Ausführungsbeispielen und den Figuren exemplarisch beschrieben werden.

Es zeigen:
- Figur 1: eine schematische Darstellung einer erfindungsgemäßen Ausführungsform;
- Figur 2: ein Beispiel für eine Gestaltung der Erfindung im Bereich der Gehäusedurchführung;
- Figur 3: ein Beispiel für eine Gestaltung der Erfindung im Bereich der Sensoraufnahme;
- Figur 4: ein Beispiel einer alternativen Ausgestaltung im Bereich der Sensoraufnahme.

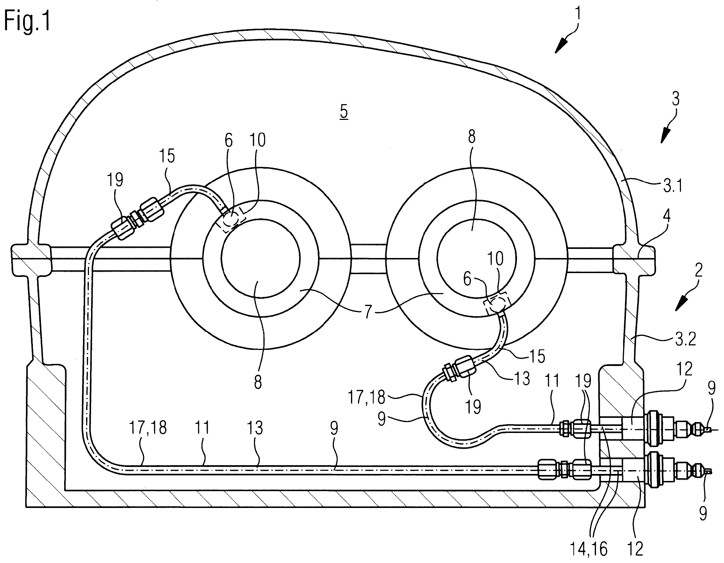

In der Figur 1 ist ein Getriebe 1 mit einem erfindungsgemäßen Getriebesensoranschlusssystem 2 gezeigt. Das Getriebe 1 weist ein Gehäuse 3 auf, hier mit einem Gehäuseoberteil 3.1 und einem Gehäuseunterteil 3.2, die entlang einer Teilfuge 4 aneinander gefügt sind, um den Getriebeinnenraum 5 zu umschließen. Im Getriebeinnenraum 5 sind Getriebezahnräder und dergleichen angeordnet, die hier nicht näher beschrieben werden.

Im Getriebeinnenraum 5 sind ferner Sensoren 6 positioniert, die eine physikalische Größe im Getriebeinnenraum 5, hier beispielsweise die Temperatur in den Lagern 7 der Getriebewelle 8 erfassen. Die Sensoren 6 weisen jeweils wenigstens eine Sensorleitung 9 auf, über welche die erfassten Größen aus dem Getriebe 1 herausgeleitet werden, beispielsweise zu einem hier nicht näher dargestellten Steuergerät. Die Sensorleitung 9 ist als flexible Leitung ausgebildet.

Die Sensoren 6 sind in einer schematisch angedeuteten Sensoraufnahme 10 vorgesehen. Eine solche Sensoraufnahme 10 kann ein Raum, hier beispielsweise innerhalb eines Lagers 7 oder auch eine andere Einrichtung sein, beispielsweise nur eine Befestigungseinrichtung für den Sensor 6.

Die Sensoraufnahme 10 ist jeweils über einen Sensorleitungskanal 11 mit einer Gehäusedurchführung 12 verbunden und zwar derart, dass ein Innenraum 13 des Sensorleitungskanals 11 gegenüber dem Getriebeinnenraum 5 öldicht abgedichtet ist. Somit kann im Getriebeinnenraum 5 befindliches Öl nicht in den Sensorleitungskanal 11 beziehungsweise dessen Innenraum 13 gelangen und von dort über den Sensorleitungskanal 11 in die Umgebung des Getriebes 1. Zugleich ist es möglich, den Sensor 6 ohne Öffnen des Getriebes 1, das heißt ohne Trennen des Gehäuseoberteils 3.1 und des Gehäuseunterteils 3.2 an der Teilfuge 4 aus der Sensoraufnahme 10 und aus dem Getriebe 1 herauszunehmen und gegebenenfalls durch einen anderen Sensor zu ersetzen.

Im gezeigten Ausführungsbeispiel weist der Sensorleitungskanal 11 einen ersten Rohrbogen 14 im Bereich der Gehäusedurchführung 12 und einen zweiten Rohrbogen 15 im Bereich der Sensoraufnahme 10 auf. Der oder die Rohrbögen 14, 15 müssen nicht unbedingt gebogen ausgeführt sein, sondern können auch als gerades Rohrstück 16 ausgebildet sein, wie hier in der Figur 1 exemplarisch im Bereich der Gehäusedurchführung 12 gezeigt ist. Zwischen den Rohrbögen 14, 15, unabhängig von ihrer Ausbildung als gebogenes Rohr oder gerades Rohrstück 16, ist eine Rohrleitung 17 oder ein flexibler Schlauch 18 vorgesehen, um den Sensorleitungskanal 11 zu schließen. Ob eine Rohrleitung 17 oder ein flexibler Schlauch 18 gewählt wird, hängt vom Einzelfall ab.

Im gezeigten Ausführungsbeispiel ist jeweils eine Schraubverbindung 19 zwischen dem flexiblen Schlauch 18 beziehungsweise der Rohrleitung 17 und dem Rohrstück 16 beziehungsweise dem Rohrbogen 14, 15 vorgesehen.

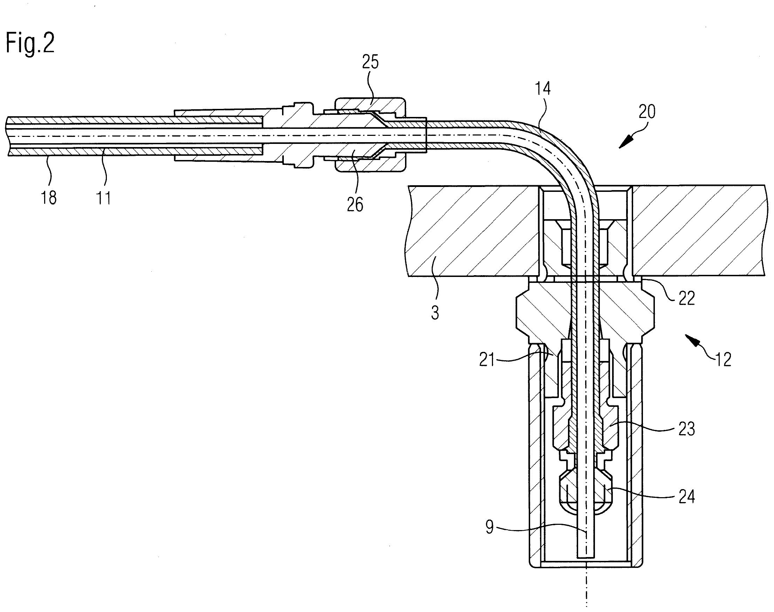

In der Figur 2 ist ein Ausführungsbeispiel für das Getriebesensoranschlusssystem im Bereich der Gehäusedurchführung 12 gezeigt. Hier ist an die Gehäusedurchführung 12 ein erster Rohrbogen 14 angeschlossen.

Das Gehäuse 3 weist eine Bohrung 20 auf, in welcher die Gehäusedurchführung 12 befestigt ist. Die Gehäusedurchführung 12 wird hier durch eine Klemmverschraubung gebildet, im Einzelnen mit einer ersten in das Gehäuse 3 eingeschraubten Klemmschraube 21, die mit einem Dichtelement 22 gegen das Gehäuse 3 abgedichtet ist. In die erste Klemmschraube 21 ist eine zweite Klemmschraube 23 eingeschraubt. Die zweite Klemmschraube 23 ist beispielsweise ortsfest am ersten Rohrbogen 14 (beziehungsweise dem Rohrstück, falls ein solches vorgesehen ist) angeschlossen oder anschließbar oder verklemmt dieses insbesondere zusammen mit der ersten Klemmschraube 21 um eine ortsfeste Halterung zu erreichen.

Im gezeigten Ausführungsbeispiel ist in die zweite Klemmschraube 23 eine dritte Klemmschraube 24 eingeschraubt, welche beispielsweise ortsfest an der Sensorleitung 9 angeschlossen ist oder diese verklemmt.

Am der Gehäusedurchführung 12 abgewandten Ende des ersten Rohrbogens 14 (beziehungsweise allgemein des Rohrstücks) ist eine Schraubmuffe 25 vorgesehen, in welche ein Schraubnippel 26 des flexiblen Schlauchs 18 (oder auch einer Rohrleitung) eingeschraubt ist. Der Schraubnippel 26 ist gegenüber der Schraubmuffe 25 abgedichtet, ferner gegenüber dem flexiblen Schlauch 18, sodass kein Öl in den Sensorleitungskanal 11 gelangen kann.

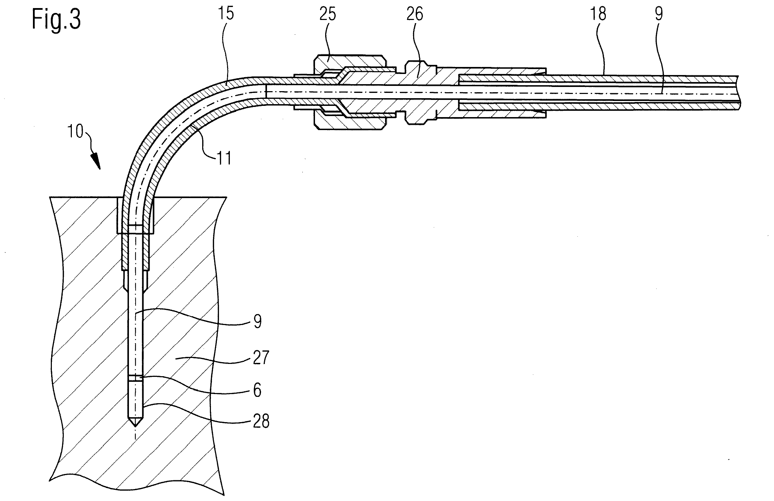

In der Figur 3 ist das andere Ende des flexiblen Schlauchs 18 gezeigt, ebenfalls mit einem entsprechenden Schraubnippel 26, der in eine Schraubmuffe 25, hier des zweiten Rohrbogens 15 (oder allgemein eines Rohrstücks), eingeschraubt ist.

Selbstverständlich können die Positionen von Muffe und Nippel an den Enden des Schlauchs oder Rohrstücks gegeneinander ausgetauscht werden.

Der zweite Rohrbogen 15 (oder allgemein das Rohrstück) ist im gezeigten Ausführungsbeispiel in eine Wandung 27 eines die Sensoraufnahme 10 ausbildenden Aufnahmeraums 28 eingeschraubt. Der Aufnahmeraum 28 kann, wie hier gezeigt ist, beispielsweise durch eine Bohrung gebildet sein.

Der zweite Rohrbogen 15 ist gegenüber der Wandung 27 öldicht abgedichtet.

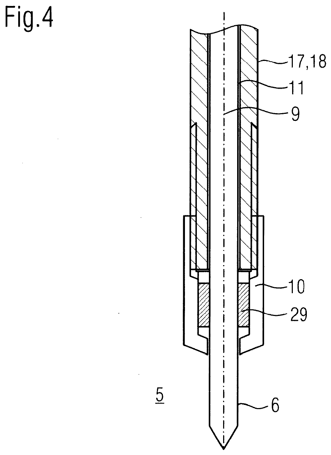

In der Figur 4 ist eine alternative Ausgestaltung zu der Figur 3 gezeigt, bei welcher der Sensor 6 frei im Getriebeinnenraum 5 positioniert werden kann das heißt ohne Abdichtung gegenüber dem Getriebeöl. Hier wird die Sensoraufnahme 10 durch eine Mutter oder Schraubhülse gebildet, die auf die Rohrleitung 17 oder den flexiblen Schlauch 18 endseitig aufgeschraubt ist. Damit kein Öl in den Sensorleitungskanal 11 gelangen kann, ist die Sensoraufnahme 10 gegenüber der äußeren Oberfläche der Sensorleitung 9 mit einem Dichtelement 29, hier eine Ringspaltdichtung, abgedichtet. Das Dichtelement 29 kann derart gestaltet sein, dass es beim Herausziehen des Sensors 6 beziehungsweise der Sensorleitung 9 den Durchtritt automatisch schließt. Alternativ wird der Durchtritt während des Herausziehens beziehungsweise nach dem Herausziehen des Sensors 6 beziehungsweise der Sensorleitung 9 offen gelassen und anderweitig dafür gesorgt, dass während dieser Zeit kein Öl in den Sensorleitungskanal 11 spritzen kann, beispielsweise durch Stilllegen des Getriebes.

### Bezugszeichenliste

- 1.: Getriebe
- 2.: Getriebesensoranschlusssystem
- 3: Gehäuse
- 3.1: Gehäuseoberteil
- 3.2: Gehäuseunterteil
- 4: Teilfuge
- 5: Getriebeinnenraum
- 6: Sensor
- 7: Lager
- 8: Welle
- 9: Sensorleitung
- 10: Sensoraufnahme
- 11: Sensorleitungskanal
- 12: Gehäusedurchführung
- 13: Innenraum
- 14: erster Rohrbogen
- 15: zweiter Rohrbogen
- 16: Rohrstück
- 17: Rohrleitung
- 18: flexibler Schlauch
- 19: Schraubverbindung
- 20: Bohrung
- 21: erste Klemmschraube
- 22: Dichtelement
- 23: zweite Klemmschraube
- 24: dritte Klemmschraube
- 25: Schraubmuffe
- 26: Schraubnippel
- 27: Wandung
- 28: Aufnahmeraum
- 29: Dichtelement

## Patentansprüche

1. Getriebesensoranschlusssystem (2) zum Anschließen und Kontaktieren eines innerhalb eines Getriebes (1) positionierten Sensors (6)
1.1 mit einer Sensoraufnahme (10) zum Aufnehmen und Positionieren des Sensors (6) innerhalb des Getriebes (1);
mit einer Sensorleitung (9), einem Sensorleitungskanal (11) und, einem flexiblen Schlauch (18) oder einer plastisch verformbaren Rohrleitung (17);
1.2 mit einer Gehäusedurchführung (12) zum Durchführen der mit dem Sensor verbundenen, insbesondere flexiblen Sensorleitung (9) durch ein einen Getriebeinnenraum (5) des Getriebes (1) umschließendes Gehäuse (3) des Getriebes (1);
1.3 mit einer Gehäuseabdichtung zum Abdichten der Gehäusedurchführung (12) gegen das Gehäuse (3); wobei
1.4 die Sensoraufnahme (10) über den Sensorleitungskanal (11) mit der Gehäusedurchführung (12) verbunden ist, der Sensorleitungskanal (11) einen Innenraum (13) zum Aufnehmen der Sensorleitung (9) aufweist und eine Abdichtung zum öldichten Abdichten des Innenraumes (13) gegenüber dem Getriebeinnenraum (5) vorgesehen ist; wobei
1.5 die Sensorleitung (9) im Bereich der Gehäusedurchführung (12) über eine Steckverbindung oder über eine Schraubverbindung lösbar mit dem Sensorleitungskanal (11) verbunden ist, und
1.6 dass der Sensorleitungskanal (11) wenigstens einen ersten Rohrbogen (14) oder ein Rohrstück (16) im Bereich der Gehäusedurchführung (12) und wenigstens einen zweiten Rohrbogen (15) oder ein Rohrstück (16) im Bereich der Sensoraufnahme (10) umfasst, wobei der erste Rohrbogen (14) oder das Rohrstück (16) mit dem zweiten Rohrbogen (15) oder dem Rohrstück (16) über den flexiblen Schlauch (18) oder die plastisch verformbare Rohrleitung (17) zur Ausbildung des Sensorleitungskanals (11) verbunden ist.

2. Getriebesensoranschlusssystem (2) gemäß Anspruch 1, **dadurch gekennzeichnet, dass** die Sensorleitung (9) im Bereich der Sensoraufnahme (10) im Sensorleitungskanal (11) frei von einer Verbindung, insbesondere Verklemmung mit dem Sensorleitungskanal (11) geführt ist.

3. Getriebesensoranschlusssystem (2) gemäß Anspruch 1 oder 2, **dadurch gekennzeichnet, dass** der flexible Schlauch (18) oder die Rohrleitung (17) lösbar an den Rohrbögen (14, 15) oder Rohrstücken (16) angeschlossen ist, insbesondere mittels einer Schraubverbindung (19) oder einer Steckverbindung, und gegenüber den Rohrbögen (14, 15) oder Rohrstücken (16) öldicht abgedichtet ist.

4. Getriebesensoranschlusssystem (2) gemäß einem der Ansprüche 1 bis 3, **dadurch gekennzeichnet, dass** der erste Rohrbogen (14) oder das Rohrstück (16) eine Klemmverschraubung zu seiner Befestigung in einer Bohrung (20) des Gehäuses (3) aufweist und gegenüber der Klemmverschraubung öldicht abgedichtet ist.

5. Getriebesensoranschlusssystem (2) gemäß einem der Ansprüche 1 bis 4, **dadurch gekennzeichnet, dass** die Sensoraufnahme (10) einen Aufnahmeraum (28) zur Aufnahme des Sensors (6) mit einer den Aufnahmeraum (28) umschließenden Wandung (27) aufweist und der zweite Rohrbogen (15) oder das Rohrstück (16) gegenüber der Wandung (27) öldicht abgedichtet ist.

6. Getriebesensoranschlusssystem (2) gemäß Anspruch 5, **dadurch gekennzeichnet, dass** der zweite Rohrbogen (15) oder das Rohrstück (16) in die Wandung (27) eingesteckt oder eingeschraubt ist.

7. Getriebesensoranschlusssystem (2) gemäß einem der Ansprüche 1 bis 6, **dadurch gekennzeichnet, dass** der Sensorleitungskanal (11) im Bereich der Sensoraufnahme (10) ein Dichtelement (29) zum öldichten Abdichten des Innenraumes (13) gegenüber der Sensorleitung (9) aufweist.

8. Getriebesensoranschlusssystem (2) gemäß einem der Ansprüche 1 bis 7, **dadurch gekennzeichnet, dass** der flexible Schlauch (18) oder die Rohrleitung (17) an seinem/ihren beiden Enden jeweils mit einem Schraubnippel (26) oder Stecknippel versehen ist, die beiden Rohrbögen (14, 15) oder Rohrstücke (16) an ihren dem flexiblen Schlauch (18) oder der Rohrleitung (17) zugeordneten Ende jeweils mit einer Schraubmuffe (25) oder Steckmuffe versehen sind und jeweils eine Dichtung zwischen einem Schraubnippel (26) oder Stecknippel und einer Schraubmuffe (25) oder Steckmuffe eingebracht ist.

9. Getriebesensoranschlusssystem (2) gemäß einem der Ansprüche 1 bis 8, **dadurch gekennzeichnet, dass** der erste Rohrbogen (14) oder das Rohrstück (16) von einer ersten in das Gehäuse (3) einschraubbaren Klemmschraube (21) sowie einer zweiten in die erste Klemmschraube (21) eingeschraubten Klemmschraube (23) umschlossen wird.

10. Getriebesensoranschlusssystem (2) gemäß Anspruch 9, **dadurch gekennzeichnet, dass** in die zweite Klemmschraube (23) eine dritte die Sensorleitung (9) umschließende Klemmschraube (24) einschraubbar ist.

11. Getriebe (1) mit einem von einem Gehäuse (3) umschlossenen Getriebeinnenraum (5) und einem im Getriebe (1) positionierten Sensor (6), der über eine Sensorleitung (9) mit einer Umgebung des Getriebes (1) außerhalb des Gehäuses (3) verbunden ist,
**dadurch gekennzeichnet, dass**
das Getriebe (1) ein Getriebesensoranschlusssystem (2) gemäß einem der Ansprüche 1 bis 10 aufweist, in welches die Sensorleitung (9) aufgenommen und öldicht vom Getriebeinnenraum (5) abgedichtet ist.

12. Getriebe (1) nach Anspruch 11,
**dadurch gekennzeichnet, dass**
die Sensorleitung (9) im Getriebesensoranschlusssystem (2) einseitig im Bereich der Gehäusedurchführung (12) in ihrer Lage fixiert ist.

## Claims

1. Gearbox sensor connection system (2) for connecting and making contact with a sensor (6) which is positioned within a gearbox (1)
1.1 having a sensor receptacle (10) for receiving and positioning the sensor (6) within the gear box (1); having a sensor line (9), a sensor line duct (11) and a flexible hose (18) or a plastically deformable pipeline (17);
1.2 having a housing feedthrough (12) for feeding through the, in particular flexible, sensor line (9) which is connected to the sensor, through a housing (3) of the gearbox (1); surrounding a gearbox interior (5) of the gearbox (1);
1.3 having a housing seal for sealing the housing feedthrough (12) with respect to the housing (3); wherein
1.4 the sensor receptacle (10) is connected to the housing feedthrough (12) via the sensor pipe duct (11), the sensor pipe duct (11) has an interior (13) for receiving the sensor line (9), and a seal is provided for oil-tight sealing of the interior (13) with respect to the gearbox interior (5); wherein
1.5 the sensor line (9) is detachably connected to the sensor line duct (11) in the region of the housing feedthrough (12) by means of a plug-type connection or by means of a screw-type connection, and
1.6 in that the sensor line duct (11) comprises at least one first pipe bend (14) or one pipe element (16) in the region of the housing feedthrough (12) and at least one second pipe bend (15) or one pipe element (16) in the region of the sensor receptacle (10), wherein the first pipe bend (14) or the pipe element (16) is connected to the second pipe bend (15) or the pipe element (16) via the flexible hose (18) or the plastically deformable pipe line (17) in order to form the sensor line duct (11).

2. Gearbox sensor connection system (2) according to Claim 1, **characterized in that** the sensor line (9) is guided in the region of the sensor receptacle (10) in the sensor line duct (11) in a way which is free from a connection, in particular clamped connection, to the sensor line duct (11).

3. Gearbox sensor connection system (2) according to Claim 1 or 2, **characterized in that** the flexible hose (18) or the pipeline (17) is detachably connected to the pipe bends (14, 15) or pipe elements (16), in particular by means of a screw-type connection (19) or a plug-type connection and is sealed in an oil-tight fashion with respect to the pipe bends (14, 15) or pipe elements (16).

4. Gearbox sensor connection system (2) according to one of Claims 1 to 3, **characterized in that** the first pipe bend (14) or the pipe element (16) has a clamping screw connection for attaching in a drilled hole (20) in the housing (3) and is sealed in an oil tight fashion with respect to the clamping screw connection.

5. Gearbox sensor connection system (2) according to one of Claims 1 to 4, **characterized in that** the sensor receptacle (10) has a receptacle space (28) for receiving the sensor (6) with a wall (27) which surrounds the receptacle space (28), and the second pipe bend (15) or the pipe element (16) is sealed in an oil-tight fashion with respect to the wall (27).

6. Gearbox sensor connection system (2) according to Claim 5, **characterized in that** the second pipe bend (15) or the pipe element (16) is plugged or screwed into the wall (27).

7. Gearbox sensor connection system (2) according to one of Claims 1 to 6, **characterized in that** the sensor line duct (11) has, in the region of the sensor receptacle (10), a sealing element (29) for oil-tight sealing of the interior (13) with respect to the sensor line (9).

8. Gearbox sensor connection system (2) according to one of Claims 1 to 7, **characterized in that** the flexible hose (18) or the pipeline (17) is provided at each of its two ends with a screw nipple (26) or plug-type nipple, the two pipe bends (14, 15) or pipe elements (16) are each provided at their ends associated with the flexible hose (18) or the pipeline (17) with a screw sleeve (25) or plug-type sleeve, and in each case a seal is introduced between a screw nipple (26) or plug-type nipple and a screw sleeve (25) or plug-type sleeve.

9. Gearbox sensor connection system (2) according to one of Claims 1 to 8, **characterized in that** the first pipe bend (14) or the pipe element (16) is surrounded by a first clamping screw (21) which can be screwed into the housing (3), and the second clamping screw (23) which can be screwed into the first clamping screw (21).

10. Gearbox sensor connection system (2) according to Claim 9, **characterized in that** a third clamping screw (24) which surrounds the sensor line (9) can be screwed into the second clamping screw (23).

11. Gearbox (1) having a gearbox interior (5) which is surrounded by a housing (3), and a sensor (6) which is positioned in the gearbox (1) and is connected via a sensor line (9) to an area surrounding the gearbox (1) outside the housing (3),
**characterized in that**
the gearbox (1) has a gearbox sensor connection system (2) according to one of Claims 1 to 10, into which the sensor line (9) is received and sealed in an oil-tight fashion by the gearbox interior (5).

12. Gearbox (1) according to Claim 11, **characterized in that**
in the gearbox sensor connection system (2) the sensor line (9) is secured in position on one side in the region of the housing feedthrough (12).

## Revendications

1. Système de connexion de capteur de boîte de vitesses (2) permettant de connecter et d'établir le contact avec un capteur (6) positionné à l'intérieur d'une boîte de vitesses (1), comprenant
1.1 un logement de capteur (10) permettant de recevoir et de positionner le capteur (6) à l'intérieur de la boîte de vitesses (1) ;
une ligne de capteur (9), une goulotte de ligne de capteur (11) et un tuyau flexible (18) ou une conduite (17) à déformation plastique ;
1.2 un passage de carter (12) pour faire passer la ligne de capteur (9), en particulier flexible, reliée au capteur, à travers un carter (3) de la boîte de vitesses (1) entourant un espace intérieur de boîte de vitesses (5) de la boîte de vitesses (1) ;
1.3 un joint d'étanchéité de carter pour rendre le passage de carter (12) étanche par rapport au carter (3) ; dans lequel
1.4 le logement de capteur (10) est relié au passage de carter (12) par la goulotte de ligne de capteur (11), la goulotte de ligne de capteur (11) présente un espace intérieur (13) permettant de recevoir la ligne de capteur (9), et un joint d'étanchéité pour rendre l'espace intérieur (13) étanche à l'huile par rapport à l'espace intérieur de boîte de vitesses (5) est prévu ; dans lequel
1.5 la ligne de capteur (9) au niveau du passage de carter (12) est reliée de manière détachable à la goulotte de ligne de capteur (11) par l'intermédiaire d'une connexion enfichable ou d'une connexion vissée, et
1.6 la goulotte de ligne de capteur (11) comprend au moins un premier coude de tuyau (14) ou une section de tuyau (16) au niveau du passage de carter (12) et au moins un deuxième coude de tuyau (15) ou une section de tuyau (16) au niveau du logement de capteur (10), le premier coude de tuyau (14) ou la section de tuyau (16) étant relié (e) au deuxième coude de tuyau (15) ou à la section de tuyau (16) par le tuyau flexible (18) ou la conduite (17) à déformation plastique afin de réaliser la goulotte de ligne de capteur (11).

2. Système de connexion de capteur de boîte de vitesses (2) selon la revendication 1, **caractérisé en ce que** la ligne de capteur (9) est posée au niveau du logement de capteur (10) dans la goulotte de ligne de capteur (11) sans connexion, en particulier sans serrage, avec la goulotte de ligne de capteur (11).

3. Système de connexion de capteur de boîte de vitesses (2) selon la revendication 1 ou 2, **caractérisé en ce que** le tuyau flexible (18) ou la conduite (17) est connecté(e) de manière détachable aux coudes de tuyau (14, 15) ou aux sections de tuyau (16), en particulier au moyen d'une connexion vissée (19) ou d'une connexion enfichable, et est rendu(e) étanche à l'huile par rapport aux coudes de tuyau (14, 15) ou aux sections de tuyau (16).

4. Système de connexion de capteur de boîte de vitesses (2) selon l'une quelconque des revendications 1 à 3, **caractérisé en ce que** le premier coude de tuyau (14) ou la section de tuyau (16) présente un raccord de compression destiné à le/la fixer dans un alésage (20) du carter (3), et **en ce qu'**il/elle est rendu(e) étanche à l'huile par rapport au raccord de compression.

5. Système de connexion de capteur de boîte de vitesses (2) selon l'une quelconque des revendications 1 à 4, **caractérisé en ce que** le logement de capteur (10) présente un espace de réception (28) permettant de recevoir le capteur (6) et est doté d'une paroi (27) entourant l'espace de réception, et le deuxième coude de tuyau (15) ou la section de tuyau (16) est rendu(e) étanche à l'huile par rapport à la paroi (27).

6. Système de connexion de capteur de boîte de vitesses (2) selon la revendication 5, **caractérisé en ce que** le deuxième coude de tuyau (15) ou la section de tuyau (16) est enfiché (e) ou vissé (e) dans la paroi (27) .

7. Système de connexion de capteur de boîte de vitesses (2) selon l'une quelconque des revendications 1 à 6, **caractérisé en ce que** la goulotte de ligne de capteur (11) présente au niveau du logement de capteur (10) un élément d'étanchéité (29) pour rendre l'espace intérieur (13) étanche à l'huile par rapport à la ligne de capteur (9).

8. Système de connexion de capteur de boîte de vitesses (2) selon l'une quelconque des revendications 1 à 7, **caractérisé en ce que** le tuyau flexible (18) ou la conduite (17) est muni(e) à ses deux extrémités respectivement d'un raccord à visser (26) ou d'un raccord à enficher, les deux coudes de tuyau (14, 15) ou pièces de tuyau (16) sont muni(e)s à leur extrémité associée au tuyau flexible (18) ou à la conduite (17) d'un manchon à visser (25) ou d'un manchon à enficher respectivement, et respectivement un joint d'étanchéité est introduit entre un raccord à visser (26) ou un raccord à enficher et un manchon à visser (25) ou un manchon à enficher.

9. Système de connexion de capteur de boîte de vitesses (2) selon l'une quelconque des revendications 1 à 8, **caractérisé en ce que** le premier coude de tuyau (14) ou la première section de tuyau (16) est entouré(e) d'une première vis de serrage (21) pouvant être vissée dans le carter (3) ainsi que d'une deuxième vis de serrage (23) pouvant être vissée dans la première vis de serrage (21).

10. Système de connexion de capteur de boîte de vitesses (2) selon la revendication 9, **caractérisé en ce qu'**une troisième vis de serrage (24) entourant la ligne de capteur (9) peut être vissée dans la deuxième vis de serrage (23).

11. Boîte de vitesses (1), comprenant un espace intérieur de boîte de vitesses (5) entouré par un carter (3), et un capteur (6) positionné dans la boîte de vitesses (1) et relié par une ligne de capteur (9) à un environnement de la boîte de vitesses (1) à l'extérieur du carter (3),
**caractérisée en ce que** la boîte de vitesses (1) présente un système de connexion de capteur de boîte de vitesses (2) selon l'une quelconque des revendications 1 à 10, dans lequel la ligne de capteur (9) est reçue et est rendue étanche à l'huile par rapport à l'espace intérieur de boîte de vitesses (5).

12. Boîte de vitesses (1) selon la revendication 11, **caractérisée en ce que** la ligne de capteur (9) dans le système de connexion de capteur de boîte de vitesses (2) est fixée en position d'un seul côté au niveau du passage de carter (12).
